# EUROPEAN PATENT APPLICATION

(11) **EP 0 978 984 A2**
(43) Date of publication of application: **09.02.2000**
(21) Application number: 99305919.5
(22) Date of filing: 26.07.1999
(51) Int. Cl.: H04M 7/00, H04L 12/56

(54) **Packet data transport mechanism**

(30) Priority: 07.08.1998 US 130993
(71) Applicant: LUCENT TECHNOLOGIES INC., Murray Hill, New Jersey 07974-0636 (US)
(72) Inventor: Byers, Charles Calvin, Aurora, Illinois 60504 (US); Hinterlong, Stephen Joseph, Elburn, Illinois 60119 (US); Kapauan, Alejandro A., Lisle, Illinois 60532 (US); Nanke, Trent Richard, Naperville, Illinois 60565 (US); Nordin, Ronald Alex, Naperville, Illinois 60540 (US); Novotny, Robert Allen, Naperville, Illinois 60565 (US)
(74) Representative: Watts, Christopher Malcolm Kelway, Dr.

(57) **Abstract**

A communications for interconnecting standard twisted pair loop subscriber lines to a packet network without traditional local digital switches. The packet transport edge vehicle comprises a plurality of access shelves including means for converting synchronous traffic to asynchronous traffic within each line interface circuit. The converted traffic is delivered via high speed packet data links to a data subsystem where the packets are routed to an appropriate end destination either in a packet data network, such as the Internet, or to the traditional public switched telephone network.

## Description

### Technical Field:

This invention relates to communications networks and, more particularly, to packet data transport mechanisms deployed in voice communications networks.

### Background of the Invention:

The public switched telephone network (PSTN) is in a state of evolution. The ever present demand for faster, more efficient transport of information across network resources, coupled with the desire for more advanced features and applications, has sparked experimentation and innovation in the communications industry.

One manifestation of the evolving industry is the emergence of packet data transport mechanisms (hereinafter, packet data networks) for providing communications services. Traditionally, circuit switched networks send information among nodes via well established signaling links and protocols. Packet-based data networks extend packets of digitized data over packet-based links using protocols completely different from circuit-based protocols. Packet-based data networks are normally utilized to interconnect computing systems and other broadband applications. The telecommunications industry is realizing, however, that packet-based networks have an immense capacity for voice and data transmissions. This capacity makes packet-based networks a viable alternative for a lower cost communications network of the future.

In traditional voice circuit-based networks, customer premises equipment is interconnected to a serving telecommunications switching system via a subscriber line. More particularly, the subscriber line terminates at the customer premises equipment at a first end and at a line interface unit at a second end. These line interface units allocate time slots or circuit-based resources to a particular subscriber line so that calls may be made or received. The line interface units operate in a synchronous, circuit-based mode since the vast majority of these units are interconnected to synchronous, circuit-based systems. In some convergent telecommunications networks (that is, networks comprising both circuit-based and packet-based transport systems) the synchronous traffic associated with traditional line interface circuits must be converted to a packet-based protocol before processing by a packet-based transport system. This conversion process is costly because it increases operations and administration expenses while adding expensive nodes. Nonetheless, the well established existence and ubiquitous proliferation of local line interface units makes conversion a necessary step in evolving networks.

### Summary of the Invention:

The need for a direct interconnection between a packet-based transport system and established circuit-based line interface units in converged telecommunications networks and pure packet-based communications networks is recognized. This need is addressed and a technological advance is achieved in the communications art by an "edge vehicle" which directly interconnects to traditional analog subscriber lines currently in existence. The edge vehicle receives twisted pair loop traffic and converts it to asynchronous traffic which is forwarded directly to a public packet data transport network, such as the Internet, a private packet data network or to the traditional PSTN. Advantageously, the edge vehicle operates in a convergent or a pure packet-based communications network.

In one embodiment, the edge vehicle is interconnected to an existing main distribution frame. More particularly, individual subscriber lines emanating from the main distribution frame terminate at an access shelf within the edge vehicle. Incoming twisted pair loop traffic is converted to asynchronous packet-based traffic and passed on to a data subsystem of the edge vehicle. The data subsystem receives packetized data from individual subscriber lines and forwards the data to an end destination in a packet data transport network (such as the Internet) or the traditional PSTN.

Deployment of the edge vehicle does not disrupt local loop wiring and existing customer premises equipment wiring to the main distribution frame and preserves the ability to use standard telephone instruments, facsimile machines and compatible modems. Further, multiple processing systems for conversion of circuit-based traffic to packet-based traffic are not required. The edge vehicle accomplishes all conversion and routing processes and serves as the only intermediary between the main distribution frame and the network backbone. The edge vehicle's ability to use existing customer premises equipment and wiring to the main distribution frame and the elimination of multiple subsystems between the main distribution frame and the end destination network enhances the efficiency with which communications networks process data.

### Brief Description of the Drawings:

FIG. 1A is a simplified block diagram of a communications network in which the present invention may be practiced;
FIG. 1B is a simplified block diagram of an edge vehicle shown in the communications network of FIG. 1A; and
FIG. 2 is a simplified block diagram of a common data and control system as shown in FIG. 1B.

### Detailed Description:

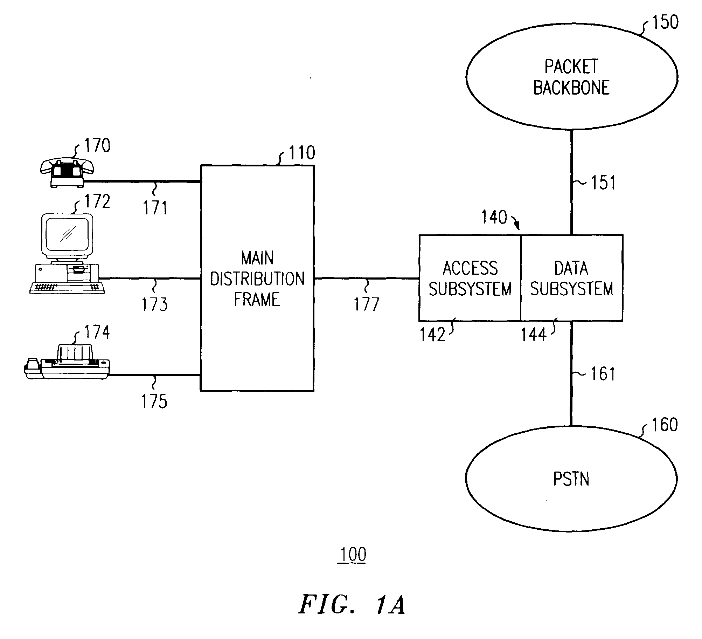

FIG. 1A is a simplified block diagram of communications network 100 comprising main distribution frame 110, edge vehicle 140, packet backbone 150 and PSTN 160.

In this embodiment, customer premises equipment 170, 172 and 174 (consisting of a telephone, computer with modem, and facsimile machine, respectively) is interconnected to main distribution frame 110 via subscriber lines 171, 173 and 175, respectively. Main distribution frame 110 is a central receiving point for subscriber lines serving a large geographic area. Normally, these subscriber lines would be distributed to various switches in a traditional voice network. In this example, subscriber lines 171, 173 and 175 coalesce into link 177 which interconnects main distribution frame 110 to edge vehicle 140.

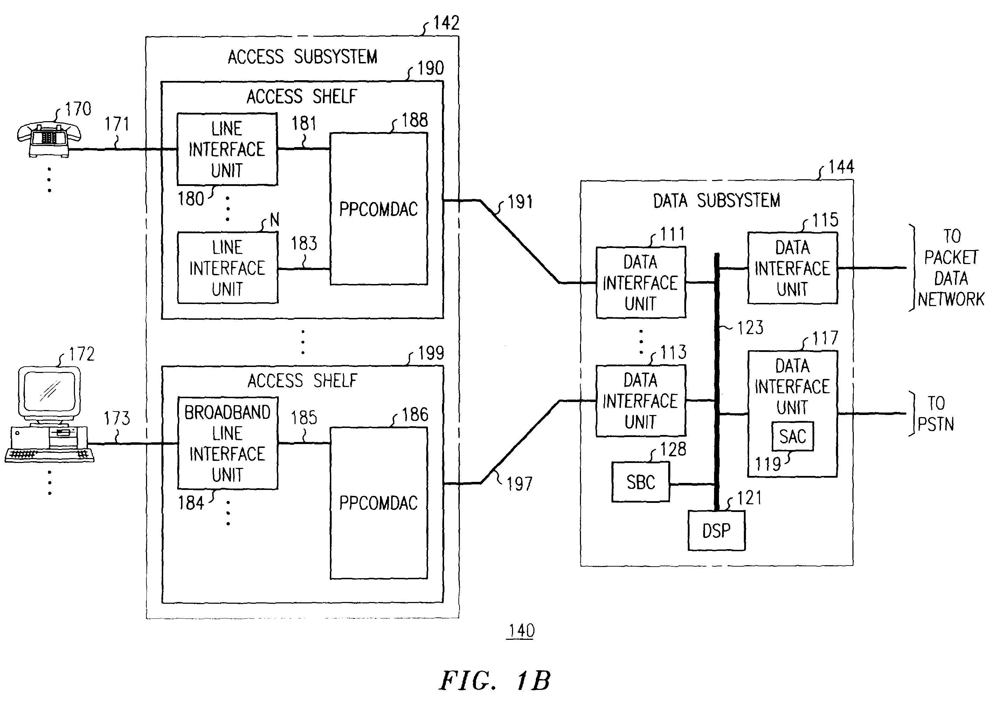

Edge vehicle 140 comprises access subsystem 142 and data subsystem 144. More particularly, link 177 is distributed across line interface units of access subsystem 142 such that each subscriber line within the link terminates at an access shelf within access subsystem 142. This termination is shown more clearly in FIG. 1B described below. During operation, twisted pair loop traffic received from each subscriber line is converted to asynchronous traffic and delivered to data subsystem 144 of edge vehicle 140. Data subsystem 144 analyzes the traffic and routes it to an appropriate end destination. Router technology is well known in the art and is described in U.S. Patent Application Serial No. 06/083,792 assigned to Lucent Technologies and incorporated by reference herein. In some circumstances the end destination is a packet data transport network, such as packet backbone 150. A packet network includes networks which operate in an Intemet protocol or asynchronous transfer mode. In other implementations, a call may be directed to a called party served by another access shelf or to a called party served by a traditional circuit-based network, such as PSTN 160. During call termination operations (that is, when calls are directed to customer premises equipment served by an access shelf), the packet address of the data subsystem is specified in routing information associated with the call. Data subsystem 144 also converts traffic from asynchronous mode back to synchronous mode to terminate the call to subscriber lines 171, 173 or 175.

FIG. 1B is a more detailed block diagram of edge vehicle 140 shown in FIG. 1A. More particularly, FIG. 1B shows customer premises equipment 170 and 172 interconnected to line interface units 180 and 184 via subscriber lines 171 and 173, respectively. When analog lines are deployed, line interface units contain battery, overvoltage, ringing, supervision, codec, hybrid and test (BORSCHT) circuits. For other line types (e.g., ISDN or ADSL) appropriate line interfaces are used. Access subsystem 142 comprises access shelves 190...199 which contain a plurality of line interface units for serving other subscriber lines and customer premises equipment. For clarity, only telephone 170 and computer 172 are shown but those skilled in the art will recognize that there may be many more line interface units and customer premises equipment served by many more access shelves.

Each line interface unit is interconnected to a packet protocol common data and control subsystem (hereinafter, PPCOMDAC). In this embodiment, line interface unit 180 is interconnected to PPCOMDAC 188 via link 181 line interface unit "N" is interconnected to PPCOMDAC 188 via link 183. Similarly, line interface unit 184 is interconnected to PPCOMDAC 186 via data link 185. A plurality of line interface units served by a PPCOMDAC comprise an access shelf, such as access shelf 190 or 199. In the preferred embodiment, calls between subscribers served by the same access shelf can be completed locally and do not require set up by a data subsystem. In other words, access shelves may interconnect via the PPCOMDAC calls if located within the same access subsystem.

Each access shelf maintains a data link to the data subsystem and can create additional subbandwidth pipes on demand as more subscriber lines go off hook. In this embodiment, access shelf 190 maintains link 191 to data subsystem 144 while access shelf 199 maintains link 197 to the same data subsystem. Both links 191 and 197 can be created on demand (subject to maximum bandwidth parameters) to accommodate an offered load.

Data subsystem 144 comprises a plurality of subscriber interface circuits. More particularly, data subsystem 144 comprises data line interface units 111, 113, 115 and 117. Each data line interface unit serves as a termination point for data links between data subsystem 144 and access subsystem 142. In this embodiment, data link 191 terminates at data line interface unit 111 while data link 197 terminates at data line interface unit 113. Data line interface circuits 111 and 113 serve as receiving interface units for call origination and as transmitting units for call termination. These units transport packetized data across backplane 123 to a "packet trunking" data line interface unit, such as data line interface units 115 or 117. Packet trunking data line interface units forward data to and receive data from an end destination network. More particularly, data line interface unit 115 carries packetized traffic to the packet network backbone. Data line interface unit 117 includes synchronous to asynchronous (SAC) functionality 119 and packages traffic on synchronous facilities to be carried to the PSTN. Also shown is single board computer (SBC) 128 for maintaining all routing information necessary to deliver packetized data to particular end destinations and performing call processing control functions. SBC 128 also generates billing data, interacts with external databases and performs operations, administration and maintenance processes (OAM&P). In the preferred embodiment, a standard protocol such as the "H.323" protocol is used for call routing and set up procedures. Alternative embodiments assume that the PSTN is equipped with asynchronous to synchronous converters for converting packetized data into synchronous form for call delivery. Digital signal processor (DSP) card 121 provides signal processing resources necessary to run signal processing algorithms such as echo cancellation compression, silence supression and dual tone multi frequency (DTMF) operations.

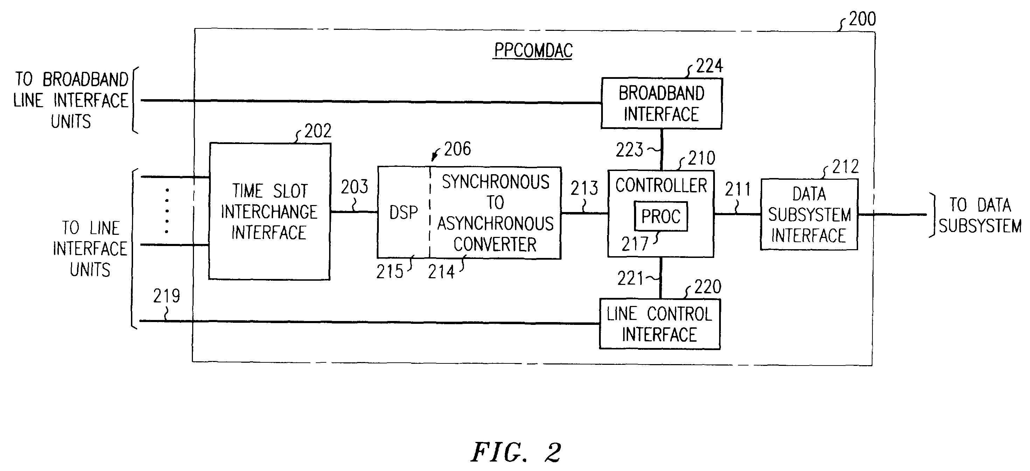

FIG. 2 is a simplified block diagram of an PPCOMDAC, such as PPCOMDAC 186 or 188 shown in FIG. 1B. In this embodiment, PPCOMDAC 200 comprises time slot interchange interface 202 which maintains a plurality of links to each of the line interface units served by PPCOMDAC 200. In other words, TSI interface 202 receives synchronous traffic over links which interconnect the PPCOMDAC to each line interface unit served by the access shelf in which it is located. TSI interface 202 is interconnected by 203 to packetization logic block 206 comprising synchronous to asynchronous converter 214 and DSP 215. As its name implies, the packetization logic block converts synchronous time slot traffic to asynchronous packet traffic. Particularly, synchronous to asynchronous converter 214 transforms incoming synchronous traffic into an asynchronous form as described in U.S. Patent 5,422,882 assigned to Lucent Technologies Inc. which is hereby incorporated by reference. Digital signal processor 215 provides support functions (DTMF, digit detection, echo cancellation, tone generation) for all lines served by PPCOMDAC 200. Converted traffic is processed by controller 210 which applies subscriber line specific features and applications to packetized data before extending the processed data to data subsystem interface 212. Controller 210 is also responsible for generating billing data, interacting with databases and OAM&P. Controller 210 is interconnected to packetization logic block 206 via link 213 and to data subsystem interface 212 via link 211. The processed data is extended to a data subsystem in accordance with a strict priority and quality of service algorithm which is stored in processor 217. In this embodiment, data subsystem interface 212 extends the packetized and feature rich data to data subsystem 144 over an established link, such as data link 191 or 197 as shown in FIG. 1B.

Line interface unit control interface 220 communicates with line interface units via control link 219 and is interconnected to controller 210 via link 221. Control interface 220 provides additional control and bandwidth to line card functions when TSI 202 is insufficient. Broadband interface 224 is a conduit between packetized data emanating from broadband lines and controller 210 for processing and routing to end destinations.

Advantageously, PPCOMDAC 200 accomplishes synchronous to asynchronous transformation at the access shelf level and does so while applying subscriber line specific service features and applications to the packetized data. Also, the present invention allows voice line concentration at an access shelf which enables direct interconnection between a subscriber line interface circuit and a packet data transport system. Therefore, the need to upgrade existing customer premises termination equipment to handle migration to a packet data network is eliminated.

Although this invention has been described with respect to a specific embodiment, those skilled in the art may devise numerous other arrangements without departing from the scope of the invention as defined in the following claims.

## Claims

1. A communications system comprising:
a plurality of subscriber lines interconnected to a main distribution frame;
a packet transport edge vehicle having two sides, the first side interconnected to the main distribution frame; and
the second side of the packet transport edge vehicle interconnected to a packet network via packet data links.

2. The communications system of claim 1 further comprising the second side of the packet transport edge vehicle interconnected to a public switched telephone network.

3. The communications system of claim 1 wherein the packet transport edge vehicle comprises:
an access subsystem.

4. The communications system of claim 3 wherein the access subsystem comprises a plurality of line interface units interconnected to a common data and control subsystem for converting synchronous traffic to asynchronous traffic.

5. The communications system of claim 3 further comprising a data subsystem for routing packetized data to an appropriate end destination network.

6. A packet protocol common data and control (PPCOMDAC) subsystem comprises:
an interface for interconnecting with a plurality of subscriber lines;
a synchronous to asynchronous converter interconnected to the interface for receiving and converting synchronous data to asynchronous data;
a controller for allocating subscriber line specific applications to asynchronous data;
a digital signal processor for signal processing functions; and
a data subsystem interface for delivering the asynchronous data to a data subsystem of a packet transport edge vehicle.

7. The PPCOMDAC of claim 6 wherein the controller allocates service features to asynchronous data associated with a particular subscriber line.

8. The PPCOMDAC of claim 6 further comprising established links to a data subsystem of a packet transport edge vehicle.

9. The communications system of claim 1 further comprising an access subsystem providing concentration to subscriber lines.

10. The communications system of claim 3 further comprising a synchronous-to-asynchronous converter stored within a data line interface unit.

11. The PPCOMDAC of claim 6 further comprising designated links for interconnecting calls between access shelves.

12. The communications system of claim 1 wherein the packet transport edge vehicle uses an Internet protocol for call processing.

13. The communications system of claim 1 wherein the packet transport edge vehicle uses asynchronous transfer mode protocols for processing.

14. The PPCOMDAC of claim 6 further comprising a processor for administering quality of service functions.

15. The PPCOMDAC of claim 6 further comprising means for generating billing data.

16. The communications system of claim 1 further comprising means for generating billing data.
